(19) Europäisches Patentamt
European Patent Office
Office européen des brevets

(11) **EP 3 563 593 B1**

(12) **FASCICULE DE BREVET EUROPEEN**

(45) Date de publication et mention
de la délivrance du brevet:
**06.01.2021 Bulletin 2021/01**

(51) Int Cl.:
*H04W 4/02* (2018.01)     *H04W 76/14* (2018.01)
*H04W 4/029* (2018.01)     *H04W 64/00* (2009.01)

(21) Numéro de dépôt: **17823121.3**

(22) Date de dépôt: **20.12.2017**

(86) Numéro de dépôt international:
**PCT/EP2017/083852**

(87) Numéro de publication internationale:
**WO 2018/122069 (05.07.2018 Gazette 2018/27)**

(54) **PROCEDE ET SYSTEME D'ECHANGES DE DONNEES**

DATENAUSTAUSCHVERFAHREN UND -SYSTEM

DATA EXCHANGE METHOD AND SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.12.2016 FR 1601868**

(43) Date de publication de la demande:
**06.11.2019 Bulletin 2019/45**

(73) Titulaires:
• **Thales**
**92400 Courbevoie (FR)**
• **SORBONNE UNIVERSITE**
**75006 Paris (FR)**
• **Centre National de la Recherche Scientifique**
**75016 Paris (FR)**

(72) Inventeurs:
• **BENBADIS, Farid**
**92622 Gennevilliers Cedex (FR)**
• **DIAS DE AMORIM, Marcelo**
**92150 Suresnes (FR)**
• **CONAN, Vania**
**92622 Gennevilliers Cedex (FR)**
• **FDIDA, Serge**
**94140 Alfortville (FR)**

(74) Mandataire: **Marks & Clerk France
Immeuble "Visium"
22, avenue Aristide Briand
94117 Arcueil Cedex (FR)**

(56) Documents cités:
**EP-A1- 3 041 286        WO-A1-2015/161442
US-A1- 2014 194 115**

**Description**

**Domaine technique de l'invention**

L'invention concerne un procédé et un système d'échanges de données dans un réseau de communication, utilisant les communications directes entre terminaux mobiles (sans passer par une infrastructure de base en fonctionnement normal).

L'invention s'applique, par exemple, dans le domaine des réseaux cellulaires, par exemple le GSM, la 3G, la 4G, et tous les standards issus du 3GPP. Les terminaux mobiles concernés sont, par exemple, des smartphones, des ordinateurs portables, des tablettes connectées et/ou des véhicules connectés, ces terminaux ayant des moyens adaptés pour communiquer directement entre eux, sans passer par une infrastructure fixe, le plus souvent par des liens radios.

**Discussion sur l'art antérieur**

Il existe plusieurs types de communications directes entre terminaux, par exemple la liaison USB, le standard Bluetooth, Wi-Fi ad hoc, Wi-Fi direct, etc. Chacune de ces communications possède ses propres caractéristiques (rappelées en fin de description), par exemple, un débit correct, une large couverture, ainsi qu'un certain nombre de limitations technologiques liées à des opérations telles que le pairage et la découverte du voisinage.

Les problèmes à résoudre pour l'exploitation des technologies dispositif-à-dispositif connues sous l'abréviation D2D sont notamment de deux ordres.

Le premier concerne la conception des techniques qui permettent d'effectuer les communications radio sans fil directes entre les terminaux. Ceci est fourni par les technologies, telles que le Bluetooth, le Wi-Fi direct et le LTE ProSe. D'autres techniques peuvent être envisagées, par exemple la technique ultra large bande ou UWB (Ultra Wide-Band).

Le deuxième problème consiste à exploiter de manière efficace et opportune le lien direct de communication entre les terminaux mobiles lorsque ce dernier existe et est disponible. Il faut alors décider à quel moment ce lien D2D va être exploité et quelles données faire transiter sur ce lien. Dans ce cadre, les connexions directes entre terminaux sont de courte durée et, dans l'état actuel des choses, les terminaux mobiles doivent perpétuellement scanner leur voisinage pour découvrir les autres terminaux qui se trouvent à proximité. Une fois qu'un nouveau terminal mobile voisin est découvert, les deux terminaux s'échangent leurs listes de contenus disponibles et, s'il y a un intérêt, l'échange de données effectif se met en place. L'un des inconvénients de ce procédé est que la batterie est sollicitée pour la découverte de voisinage qui doit s'effectuer de façon continue, et une partie du lien radio disponible lorsque deux terminaux sont à proximité l'un de l'autre est utilisée comme canal de contrôle pour l'échange des listes de contenus plutôt que pour un échange effectif des données. On note donc un gaspillage des ressources.

L'art antérieur décrit deux grandes familles de techniques qui permettent l'échange de données entre des terminaux mobiles : les solutions purement réparties qui n'exigent pas de coordination par une entité centrale et, au contraire, les solutions qui sont assistées par l'infrastructure et qui s'appuient ainsi sur une coordination centrale.

Dans une solution répartie du type purement D2D, l'idée est de permettre la transmission de données entre terminaux mobiles en mouvement sans le support d'aucune infrastructure centralisée. Comme l'existence de liens de communication entre nœuds dépend, entre autres, de la mobilité des nœuds, ces réseaux sont souvent appelés « réseaux opportunistes ». La principale caractéristique des réseaux opportunistes est *l'intermittence de la connectivité.* En effet, dans les réseaux opportunistes, la connectivité de bout en bout n'est pas assurée à tout instant, comme il est décrit dans le document de K. Fall, intitulé "A delay-tolerant network architecture for challenged internets", ACM Sigcomm, pages 27-34, Karlsruhe, Germany, 2003.

Les solutions de dissémination réparties purement D2D peuvent être structurées en cinq catégories principales : dissémination par inondation simple, dissémination probabiliste, dissémination géographique, dissémination à connaissance du voisinage et dissémination par codage réseau. Le principal objectif de ces solutions est d'obtenir un taux de dissémination important tout en minimisant le nombre de transmissions dans le réseau. Ceci est possible au travers d'un choix très précis des nœuds relais. Néanmoins, ces solutions ne font appel qu'à une connaissance locale des contacts ou des contenus à échanger, ce qui limite souvent l'efficacité des décisions prises.

Pour pallier au problème de capacité finie d'un contact, plusieurs travaux se sont attaqués à la question de la fragmentation des données pour améliorer le taux de succès lors d'une transmission (sachant que la plupart des contacts dans le monde réel sont très courts). Plusieurs stratégies de fragmentation ont été proposées.

La deuxième grande famille de techniques qui permettent l'échange de données entre terminaux mobiles s'appuie sur l'existence d'un lien entre les terminaux mobiles et l'infrastructure, en complément des liens directs entre les terminaux.

Un premier cas est fourni par les techniques de dispositif-à-dispositif D2D dans les versions avancées du LTE (ProSe). Dans cette approche, les communications directes entre les terminaux sont gérées par la station de base (eNodeB) en réutilisant des ressources de la voie montante *(uplink channel)*. Ainsi, les communications directes restent sous le contrôle de l'infrastructure cellulaire de l'opérateur, et opèrent dans une bande réservée.

Le point difficile dans ce cadre est la gestion des interférences. En effet, il ne faut pas que ces émissions directes viennent perturber des émissions sur la voie montante d'autres utilisateurs. Une solution proposée est de limiter la puissance des communications directes. D'autres travaux optimisent l'allocation de ressources entre les communications avec l'eNodeB et entre terminaux. Avec cette approche, on ne gère que les communications directes entre terminaux d'un même opérateur et l'apport additionnel de technologies telles que le Wi-Fi ou le Bluetooth qui opèrent dans d'autres bandes de fréquences n'est pas considérée.

Un deuxième type d'approche s'attaque plus directement à la façon d'échanger du contenu en exploitant les communications directes entre terminaux pour soulager l'infrastructure cellulaire. Ces approches s'inspirent des techniques de pair-à-pair; on commence par découper le contenu en blocs, puis on diffuse chaque bloc à différents terminaux mobiles dans la cellule, les blocs sont ensuite distribués aux autres terminaux mobiles par des communications directes.

La question centrale est de savoir quels terminaux mobiles ou, quel nombre de terminaux mobiles il faut utiliser pour échanger le contenu. Si on arrive à limiter le nombre d'utilisateurs UE diffusant le contenu, on économise le nombre de transmissions cellulaires (dont on augmente le taux de délestage du réseau cellulaire) et on économise l'utilisation des batteries des terminaux. On peut utiliser ces techniques notamment pour les données temps réel (streaming d'un même contenu à plusieurs utilisateurs dans une cellule).

Un premier ensemble de techniques se limite au cas du contenu multimédia (image ou vidéo) pour une diffusion en temps réel. Ainsi, Kang et al. ont développé une technique « CHUM » qui s'applique à du contenu multimédia temps réel et qui diffuse le contenu en Wi-Fi aux autres terminaux mobiles. Cette technique est décrite dans le document de S.-S. Kang et M. W. Mutka, "A mobile peer-to-peer approach for multimedia content sharing using 3G/WLAN dual mode channels," Wireless Communications and Mobile Computing, vol. 5, no. 6, pp. 633-645, 2005.

Une approche similaire, décrite dans le document de M.-F. Leung et S.-H. Chan, "Broadcast-based peer-to-peer collaborative video streaming among mobiles," IEEE Transactions on Broadcasting, vol. 53, no. 1, pp. 350-361, March 2007, est utilisée pour relier des flux vidéo temps réel : le nombre de relais diffusant est choisi pour éviter les collisions sur le canal radio et la redondance de données.

Il est aussi possible d'utiliser ces techniques pour distribuer du contenu sans contrainte temps réel qui intéresse un groupe d'utilisateurs dans un voisinage. On dispose d'un paramètre supplémentaire (par rapport au streaming) qui est la durée de validité du contenu qui peut être plus longue (et se compter en minutes, voir en heures). On peut ainsi aussi utiliser la mobilité physique des utilisateurs pour créer de nouvelles opportunités de diffusion du contenu et, ainsi, en améliorer la diffusion. Ces approches (dites de délestage de trafic) s'appuient sur des techniques antérieures issues des approches de réseau tolérant aux délais (*delay-tolerant networking* ou DTN) tel qu'il est décrit dans le document de L. Pelusi, A. Passarella et M. Conti, "Opportunistic networking data forwarding in disconnected mobile ad hoc networks," IEEE Communications Magazine, vol. 44, no. 11, pp. 134-141, 2006.

Dans les approches de délestage de trafic, on commence par envoyer (par le réseau cellulaire) un petit nombre de copies du contenu à des terminaux mobiles sources qui diffusent ensuite aux autres terminaux mobiles au gré de leurs contacts. Ces techniques fonctionnent en boucle ouverte car elles visent à déterminer les nœuds sources sans traiter la question du choix des échanges directs entre terminaux. Dans ce contexte, le problème principal est de choisir les nœuds sources afin de minimiser les communications cellulaires ou l'énergie utilisée par les terminaux mobiles.

Pour optimiser les stratégies de sélection de terminaux mobiles sources ou de relais dans la cellule, toutes ces techniques s'appuient sur une connaissance fine des interactions entre terminaux mobiles et font des hypothèses fortes de stationnarité, soit en termes de nombre de nœuds et de leur répartition dans la cellule, soit en termes de leur mobilité dans la cellule. Toutes ces approches font une analyse des données hors ligne pour aboutir à des solutions qui fonctionnent en moyenne et ne sont pas forcément optimales à chaque instant, car elles ne prennent en compte qu'un comportement moyen et non instantané.

Une approche complémentaire consiste à travailler en boucle fermée comme la solution proposée par Whitbeck, dans le document de J. Whitbeck, Y. Lopez, J. Leguay, V. Conan et M. D. de Amorim, "Push-and-track: Saving infrastructure bandwidth through opportunistic forwarding," Pervasive and Mobile Computing, vol. 8, no. 5, pp. 682-697, Oct. 2012 et dans le brevet US8862125.

Pour chaque contenu diffusé par le serveur, les terminaux mobiles acquittent la réception de ce contenu, ce qui permet au serveur de suivre la progression de la diffusion en D2D. Le serveur détecte ainsi les cas de blocages et réinjecte des copies du contenu à certains terminaux mobiles pour relancer la diffusion. Cette technique fonctionne en boucle fermée et son but principal est de définir une stratégie de réinjection qui permette la transmission de contenu à un groupe dans le but de tenir un délai de livraison maximum.

La demande de brevet WO 2015/161442 divulgue une méthode et un dispositif qui permettent une implémentation automatique d'une communication D2D au niveau de la couche applicative d'un système. Ceci permet de réduire les « overheads » de la signalisation réseau et d'améliorer le fonctionnement du procédé. Pour cela, l'information relative aux équipements utilisateurs est acquise au niveau de la couche application.

Le problème technique résolu dans le document EP 3041286, est de changer de type de liaison, passage d'une liaison D2N à une liaison D2D, en fonction de la distance existant entre deux terminaux. Ceci est réalisé en envoyant une commande de commutation à un premier terminal et un deuxième terminal et à sauvegarder ces informations dans un support. Lorsque la distance entre deux équipements ne permet pas une liaison D2D, on commute pour une liaison D2N. L'enseignement technique utilise des informations de distance, mais ne cherche pas à prédire la distance entre deux équipements utilisateurs.

Le document US 2014/0194115 décrit un procédé de découverte de dispositif qui prend en compte la mesure d'une proximité entre la borne de détection et une borne « à découvrir », et l'établissement d'une communication D2D lorsque la mesure de proximité entre les deux bornes est inférieure à un seuil prédéterminé. Son enseignement technique utilise des informations de proximité pour décider d'établir ou non une communication D2D. Il ne cherche pas à prédire la distance entre deux équipements utilisateurs.

Les techniques données par l'art antérieur présentent, malgré leurs avantages, plusieurs inconvénients.

Pour les méthodes distribuées :

- La découverte de voisin nécessite une consommation continue d'énergie, même à intervalles réguliers et peut s'avérer inutile si aucun autre terminal n'est proche ou ne dispose de contenu devant être échangé,
- Une fois la communication établie et les listes de contenus disponibles et/ou souhaités échangés, il se peut qu'aucun échange n'ait lieu suite à une divergence d'intérêts,
- Le temps de contact restant, après échange des données de signalisation, peut être insuffisant par rapport au temps requis pour l'échange de données.

Ainsi, les solutions distribuées sont peu efficaces car elles exigent des échanges d'informations de contrôle avant tout échange de données : entre autres, il faut que les terminaux identifient les contenus qu'ils possèdent déjà (stockage dans une base de données ou une mémoire), qu'ils décident les contenus qui sont prioritaires et éventuellement qu'ils compilent des informations supplémentaires sur l'état actuel des buffers des terminaux qui sont dans le voisinage. Ces opérations consomment de la bande passante utile qui n'est plus disponible pour la transmission des données. Dans le cas de communications sur de courtes durées, il ne reste alors plus de place pour la transmission des données.

Les solutions centralisées se sont intéressées à améliorer la mise en communication des terminaux mobiles et non le choix des données à transmettre. Ainsi, ces solutions ne distinguent pas les contenus de tailles différentes, de popularités (locale ou globale) différentes. Elles sont aveugles aux contenus à échanger, aux demandes ou aux besoins des utilisateurs.

Les solutions connues de l'art antérieur ne traitent pas du problème du choix des données à transmettre sur des liens D2D.

L'idée mise en œuvre dans la présente invention utilise notamment une entité centralisée dans l'infrastructure qui possède au moins la connaissance des besoins d'échange de données entre les terminaux et leur localisation dans le réseau pour piloter les échanges de messages entre les terminaux.

Dans la suite de la description, l'expression « en portée radio » bien connue de l'homme du métier sera utilisée pour désigner deux terminaux suffisamment proches pour s'échanger des données, la distance étant notamment fonction du protocole de communication utilisé.

De même, la notion de graphe est bien connue de l'homme du métier et ne sera pas détaillée. La description fait appel à un graphe d'intérêts ($G_I$, dirigé) et à un graphe de proximité (Gp, non dirigé). Dans le graphe d'intérêts, un lien dirigé estampillé $c_k$ partant du terminal mobile $i$ vers le terminal mobile $j$ indique que $i$ possède le contenu $c_k$ et que ce contenu devrait être envoyé *au* nœud $j$. Ainsi, il y a autant de liens au niveau du graphe entre deux terminaux mobiles que de nombre de contenus à échanger entre ces deux terminaux mobiles. Il y a au moins un graphe d'intérêts par application, alors que le graphe de proximité peut être unique.

**Résumé de l'invention**

La description utilise indifféremment le mot nœud, le mot terminal pour désigner un même objet, un terminal pouvant être un terminal utilisateur.

L'invention concerne un procédé d'échange de données dans un réseau de communication D2D, terminal-à-terminal, comprenant au moins un serveur de contenus, un contrôleur central comprenant un module de signalisation et plusieurs terminaux utilisateurs mobiles *i, j,* caractérisé en ce qu'il comporte au moins les étapes suivantes :

Au niveau du contrôleur central :

- Déterminer un graphe d'intérêts $G_I$ à partir d'une liste d'utilisateurs et de leurs contenus transmis par le serveur de contenus,
- Calculer une fréquence $f(i,j)$ de remontée des positions des terminaux définie en fonction d'au moins la mobilité des terminaux,
- Etablir un lien de communication entre au moins deux terminaux $i$, $j$, en exécutant les étapes suivantes :

  - Pour chaque terminal $j \in \boldsymbol{M}(i)$, où $\boldsymbol{M}(i)$ est l'ensemble des terminaux $j$ différents du terminal $i$ qui ont au moins un contenu à échanger avec le terminal $i$, calculer la distance estimée $d^{\text{est}}(i,j)$ entre le terminal $i$ et le terminal $j$ en utilisant la valeur de la dernière position $\overrightarrow{p_{\text{last}}}(i)$ du terminal $i$ et la valeur de la dernière position $\overrightarrow{p_{\text{last}}}(j)$ du terminal $j$ connues par le contrôleur central,
  - Pour chaque terminal $j \in \boldsymbol{M}(i)$, prédire la distance $d^{\text{pred}}(i,j)$ entre le terminal $i$ et le terminal $j$ en utilisant $d^{\text{est}}(i,j)$, la vitesse relative entre le terminal $i$ et le terminal $j$ et la fréquence de remontée des positions $f(i,j)$,
  - Pour chaque terminal $j \in \boldsymbol{M}(i)$ définir dans le graphe d'intérêts un paramètre $g(i,j)$ qui est mis à la valeur 1 lorsque la distance estimée $d^{\text{est}}(i,j)$ ou la distance prédite $d^{\text{est}}(i,j)$ sont inférieures à une distance seuil $d^{\text{seuil1}}$ et à zéro dans le cas contraire,
  - Lorsque $g(i,j) = 1$, le contrôleur central envoie une instruction au terminal $i$ disposant du contenu à transmettre au terminal $j$, pour établir une communication D2D entre un terminal $i$ et un terminal $j$ et pour transmettre le contenu requis,

Au niveau du terminal

- Le terminal $j$ émet un accusé réception ACK du contenu vers le contrôleur central, ledit contrôleur central émet une instruction de mise à jour de la base des contenus vers le serveur de contenus.

La fréquence de mise à jour $f(i,j)$ de la position des terminaux est, par exemple, déterminée en fonction du gradient de la distance $d^{\text{est}}(i,j)$.

Selon un autre mode de réalisation, la fréquence de mise à jour $f(i,j)$ de la position d'un terminal est déterminée en définissant plusieurs zones entre un premier terminal $i$ et un terminal $j$ :

- Une Zone $Z_1$, dans laquelle les terminaux communiquent et dans laquelle la fréquence de mise à jour est une fréquence maximale définie en fonction de l'application $fmax$,
- Une Zone $Z_4$ dans laquelle les terminaux ont une faible chance de communiquer pour laquelle la fréquence de mise à jour est une fréquence minimale $fmin$,
- Une ou plusieurs zones intermédiaires dans laquelle ou lesquelles la fréquence de mise à jour est comprise entre $fmin$ et $fmax$.

A l'instant où le terminal $i$ remonte sa position courante, le contrôleur central calcule la distance estimée à cet instant entre les terminaux $i$ et $j$ et une prochaine distance prédite en fonction de la fréquence actuelle et de la vitesse relative entre les terminaux :

$$d^{\text{pred}}(i,j) = d^{\text{est}}(i,j) - \frac{\vec{v}(i,j)}{f(i,j)}.$$

où $f(i,j) \in \{f_{\min}, f_{\text{med}}, f_{\max}\}$. et en transmettant une instruction à $i$ et à $j$ d'adapter la fréquence SI $f^{\text{pred}}(i,j) \neq f(i,j)$.

Selon une variante de réalisation, un niveau de priorité est associé à un contenu et le contrôleur central sur réception de plusieurs contenus tient compte de ce niveau de priorité pour choisir une interface de communication à activer.

Le procédé peut être mis en œuvre dans un système utilisant une des technologies de communication suivantes : Bluetooth, Wi-Fi-direct , Wi-Fi ad hoc, LTE ProSe, BLE, LTE D2D.

Lorsque le protocole utilisé est le protocole Bluetooth, le procédé détermine la taille des zones de la manière suivante :

$$d^{\text{seuil}_2} = \frac{\vec{v}(i,j)}{f_{\max}} + d^{\text{seuil}_1}; \qquad d^{\text{seuil}_3} = \frac{\vec{v}(i,j)}{f_{\text{med}}} + d^{\text{seuil}_2}$$

$f_{med} = f_{max}/2$, $\vec{v}(i,j)$ la vitesse relative des deux terminaux.

L'invention concerne aussi un système pour gérer des échanges de données dans un réseau de communication comprenant un module de communication D2D (205) comportant un serveur de contenus, un contrôleur central et plusieurs terminaux i, j, caractérisé en ce qu'il comporte au moins les éléments suivants :

Un contrôleur central adapté à exécuter les étapes du procédé selon l'invention et comportant au moins :

- un module de gestion de contenu,
- un module SLA contenant une information de service requise pour un contenu en fonction des utilisateurs, un module (203) pour la construction d'un graphe d'intérêts, $G_I$, un module (204) pour la construction d'un graphe de proximité $G_P$,
- un module de signalisation,

Un serveur de contenus comportant au moins :

- un module SLA contenant une information de service requise par chacun des terminaux utilisateurs,
- une mémoire contenant les contenus disponibles pour les terminaux,

Un terminal mobile comprend au moins :

- un module contenant les informations de position,
- un gestionnaire des interfaces de communication adapté à recevoir un signal d'activation de la part du contrôleur central pour la communication entre au moins deux terminaux,
- un module de gestion de la communication D2D,
- une mémoire de stockage des contenus demandés par un terminal,
- un module de réception et exécution des instructions transmises par le contrôleur central,
- un module de communication.

Le système comporte par exemple un ou plusieurs modules de communication choisis parmi la liste suivante : un module de communication cellulaire, un module de communication Bluetooth, un module de communication Wi-Fi, un module de communication sans fil un module de communication LTE, un module de communication BLE, un module de communication LTE D2D.

**Brève description des figures**

D'autres caractéristiques et avantages de la présente invention apparaîtront mieux à la lecture de la description d'exemples de réalisation annexée des figures qui représentent :

- Figure 1, un exemple d'architecture générale du système,
- Figure 2, un détail des modules permettant la mise en œuvre du procédé selon l'invention par les terminaux et le contrôleur central,
- Figure 3A, une illustration des étapes du procédé et figure 3B des zones dites de contrôle et
- Figure 4, une illustration des étapes du procédé selon l'invention.

**Description détaillée d'un ou de plusieurs modes de réalisation**

Le système selon l'invention sert notamment d'intermédiaire entre un serveur de contenus et plusieurs terminaux mobiles qui souhaitent s'échanger des données relatives à ce service.

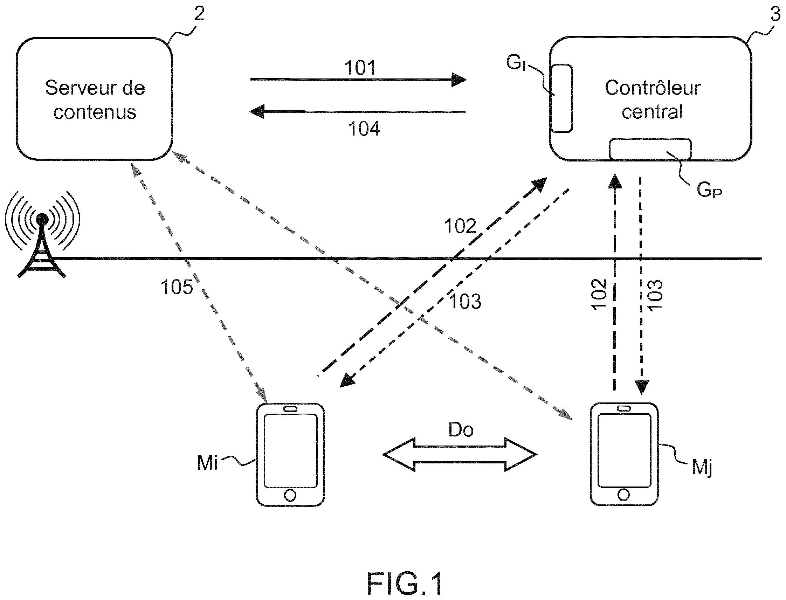

La figure 1 illustre un exemple de système 1 selon l'invention comportant un serveur de contenus 2, plusieurs terminaux mobiles $M_i$ qui souhaitent s'échanger des données relatives à un service, et un contrôleur central 3 ayant notamment pour fonction de décharger les terminaux de la partie contrôle de la communication en fonctionnement normal. Dans ce contrôleur central sont répertoriées les positions des terminaux ainsi que les données à échanger. Les terminaux s'échangent des données *Do* en utilisant une signalisation efficace car adaptée aux besoins d'échange entre les deux terminaux. La signalisation permet, en adaptant la fréquence de remontée de position (fréquence de mise à jour des informations), d'assurer un mécanisme de découverte ou « beaconing » plus efficace. De plus, ces terminaux ne procèdent plus de façon continue à la phase de découverte des terminaux voisins, préservant ainsi leur batterie. Le terminal mobile utilisera son temps de contact principalement pour un échange de données utiles.

Le serveur de contenus 2 transmet des métadonnées et la liste des contenus que chaque terminal est censé recevoir 101 vers le contrôleur central 3 qui crée et maintient le graphe d'intérêts $G_I$ et le graphe de proximité $G_P$. Le contrôleur central 3 envoie des instructions 102 vers les terminaux mobiles $M_i$ et reçoit la position et des informations relatives au transfert du contenu 103 de la part des terminaux mobiles, selon des étapes détaillées ci-après. Le contrôleur central 3 envoie des mises à jour régulières au serveur de contenu concernant les nœuds ayant reçu les contenus demandés 104. Un canal de Backup 105 peut être utilisé en cas de besoin entre le serveur de contenu et les terminaux mobiles.

Le contrôleur central a une vue globale du réseau. Il présente notamment les fonctionnalités suivantes :

- Le contrôleur central sait à tout moment quelles sont les positions géographiques des différents terminaux mobiles, de quelles technologies de communication directe ils disposent et quelles données ils ont comme contenu à échanger avec un ou plusieurs autres terminaux. Il peut également avoir des informations supplémentaires telles que le niveau de la batterie, la quantité de données cellulaires consommées (ou restant à consommer) par un terminal, etc. ;
- En fonction des positions des terminaux mobiles, des technologies de communications directes dont ils disposent et des données qu'ils ont et qu'ils attendent (et éventuellement en fonction d'autres informations telles que le niveau de batterie), le serveur central est capable de calculer, pour un instant $t$, les terminaux qui doivent communiquer avec quels autres terminaux et quelles données ils doivent échanger ;

- Le contrôleur central envoie des instructions d'activation et de désactivation des interfaces de communications directes seulement quand un échange est possible, évitant ainsi aux terminaux d'activer inutilement l'interface de communication directe ;
- Le contrôleur central envoie les instructions d'échange aux terminaux. Ces instructions contiennent, par exemple, l'identifiant du terminal source $ID_s$, l'identifiant du terminal destination $ID_d$ et les données (contenus) devant être échangées ;
- Lorsque les terminaux reçoivent un nouveau contenu, ils en informent le contrôleur central qui met à jour sa base de données indiquant les couples (terminal, contenu des données dont dispose le terminal).

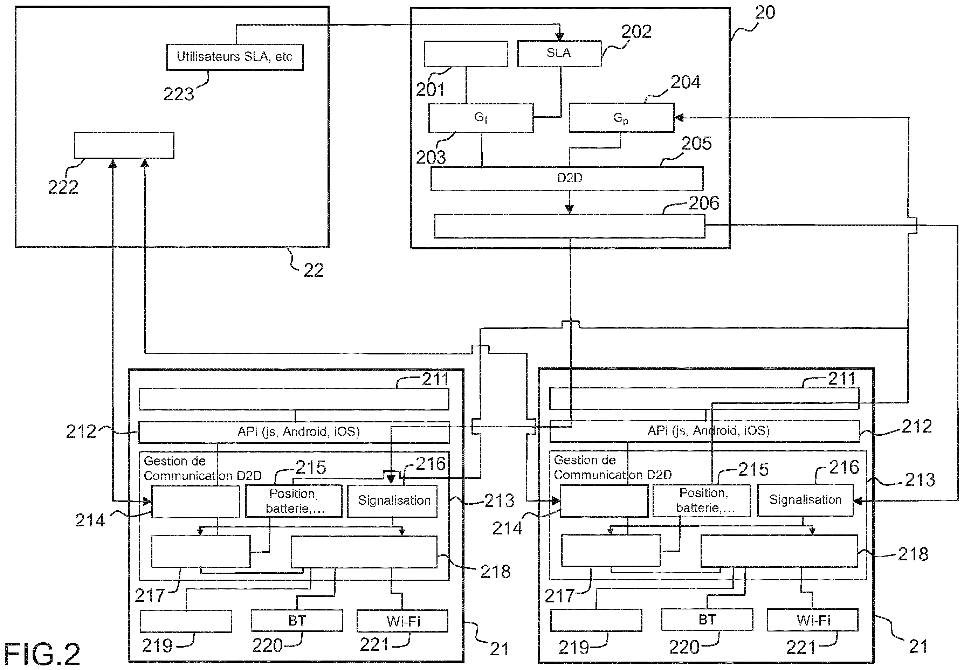

La figure 2 représente de manière détaillée un exemple de modules équipant les terminaux mobiles ainsi que le contrôleur central selon l'invention.

Le contrôleur central 20 comporte un module de gestion de contenus 201, un module SLA, 202, contenant la qualité de service requise pour un contenu en fonction des utilisateurs, un module 203, pour la construction de graphes d'intérêts, $G_I$, un module 204 pour la construction de proximité $G_P$, les graphes sont construits à partir des informations transmises par les terminaux utilisateurs, un module 205 « calcul des communications D2D » qui va recevoir les informations sur le graphe d'intérêts et le graphe de proximité, calculer les échanges de contenus qui doivent être effectués et transmettre les instructions au module de signalisation 206. Le module de signalisation génère les messages d'instruction, notamment l'activation/désactivation des interfaces des terminaux utilisateurs ainsi que les instructions d'échange de contenu.

Un terminal 21 comporte une couche application 211, une interface de programmation applicative ou API 212, un module de gestion de la communication D2D, 213. Ce module de gestion 213 comporte une mémoire de stockage des contenus 214 demandés par un terminal, un « module » 215 comprenant les informations relatives au terminal, informations GPS, niveau de la batterie, etc., un module 216 de réception et exécution des instructions transmises par le contrôleur central, un module de routage 217, un gestionnaire des interfaces 218, différents modes de communication: cellulaire, 219, Bluetooth, 220, Wi-Fi 221. Il est aussi possible d'utiliser tout autre module de communication sans fil.

Le module 216 de réception et d'exécution des instructions va notamment activer et désactiver les interfaces de communication des terminaux mobiles.

Un serveur de contenus 22 comprend un module SLA 223 contenant l'information d'abonnement de chacun des utilisateurs, information qu'il transmet au contrôleur central, et une mémoire 222 contenant les contenus disponibles pour les terminaux.

Les échanges d'information et d'instruction entre le contrôleur central, les terminaux et un serveur de contenus se font au moyen de technologies de communication connues de l'homme du métier et qui ne seront pas détaillées car n'étant pas l'objet de l'invention.

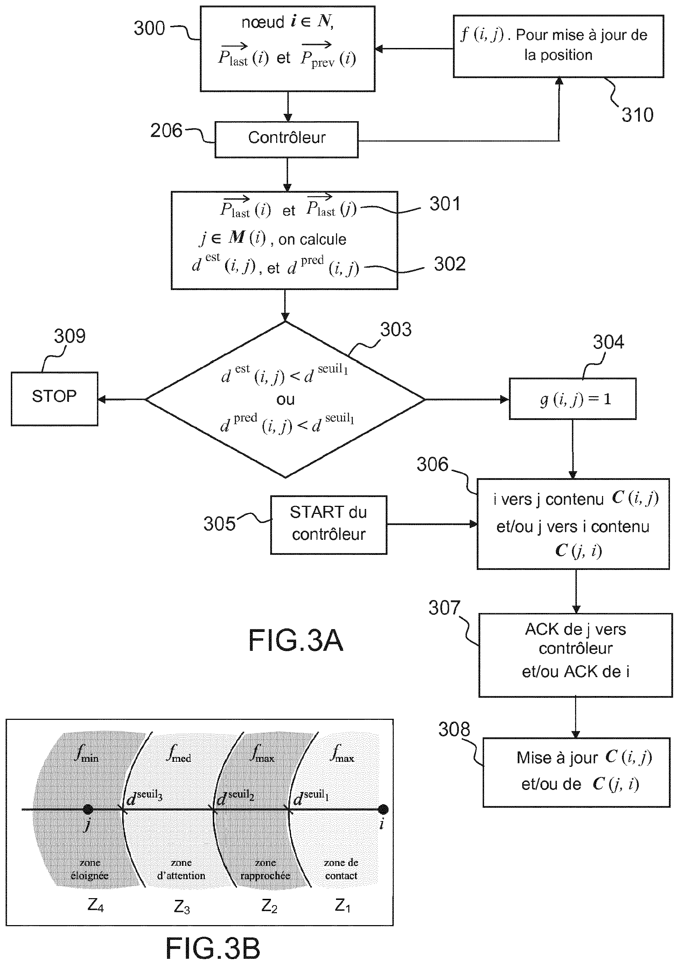

La figure 3A illustre une succession d'étapes mises en œuvre par le contrôleur central. Le procédé mis en œuvre par l'invention consiste notamment à rapprocher les dimensions « données » et « proximité géographique », c'est-à-dire que deux terminaux mobiles à proximité n'établissent une connexion que s'ils ont des données à échanger. Cette décision prise conjointement par le module de calcul des interactions D2D 205 et le module de signalisation 206 s'articule en deux prises de décisions liées :

- Une instruction qui vise à indiquer à un terminal mobile d'enclencher le mécanisme D2D de découverte connu sous le terme anglo-saxon beaconing, d'établissement de canal D2D et d'échange de contenus,

- Une instruction indiquant à chaque terminal à quelle fréquence remonter ses positions vers le contrôleur central.

Le graphe d'intérêts $G_I$ est dirigé, car il se peut qu'un terminal i ait quelque chose à envoyer au terminal j mais pas le contraire. Un lien dirigé estampillé $c_k$ partant d'un terminal mobile i vers un terminal mobile j indique que i possède le contenu $c_k$ et que ce contenu devrait être envoyé au terminal j. Ainsi, il y a autant de liens entre deux terminaux mobiles que de nombre de contenus à échanger entre ces deux terminaux mobiles. Le graphe de proximité $G_P$ est, par contre, non dirigé, et chaque arc est étiqueté par la valeur estimée de la distance entre le terminal mobile i et le terminal mobile j. Il y a au moins un graphe d'intérêts par application, alors que le graphe de proximité peut être unique.

Pour que le module de calcul des interactions 205 décide si deux terminaux mobiles i et j doivent établir une connexion, deux conditions doivent être respectées. Tout d'abord, les terminaux mobiles doivent avoir au moins un contenu $c_k$ à échanger. Ensuite, les terminaux mobiles doivent être suffisamment près l'un de l'autre pour qu'une connexion puisse être établie (terminaux en portée radio par exemple).

La première condition est vérifiée par le serveur de contenus 22 qui envoie au contrôleur central 20 la liste des terminaux mobiles abonnés et les contenus devant leur être confiés. Le module de construction de « graphe d'intérêt » 203 crée et maintient le graphe d'intérêts $G_I$ à partir de cette liste.

Afin que le contrôleur central décide si deux terminaux mobiles sont suffisamment près l'un de l'autre (deuxième condition, échange du contenu), il doit disposer de la localisation géographique (position) de ces terminaux mobiles ; ceci permet de vérifier que les terminaux sont par exemple en portée radio ou suffisamment proches l'un de l'autre pour établir une communication. Avoir la position des terminaux mobiles en continue peut s'avérer extrêmement coûteux en termes de consommation énergétique. Le procédé utilise un algorithme intelligent exécuté par le contrôleur central pour la remontée de positions et de contenus échangés entre terminaux selon une succession d'étapes dont un exemple détaillé est donné ci-après.

Soit **N** la liste de tous les nœuds authentifiés auprès du contrôleur central et $C(i,j)$ l'ensemble des liens dans le graphe d'intérêts allant de i vers j (c'est-à-dire, la liste des contenus que le noeud i possède et que le noeud j demande). Noter que $\boldsymbol{C}(i,j) \neq \boldsymbol{C}(j,i)$. Notons $\boldsymbol{M}(i)$ l'ensemble de tous les nœuds $j \neq i$ pour lesquels $[C(i,j) \cup \boldsymbol{C}(j,i)] \neq \{\}$ (c.-à-d., i et j ont au moins un contenu à échanger). L'ensemble $\boldsymbol{M}(i)$ définit également les voisins du nœud i dans le graphe de proximité.

Pour chaque nœud $i \in \boldsymbol{N}$, le contrôleur central 20 conserve les dernière et avant-dernière positions géographiques connues de i, et transmises par le noeud i, notées respectivement $\overrightarrow{p_{\text{last}}}(i)$ et $\overrightarrow{p_{\text{prev}}}(i)$, 301. Ces deux positions servent à estimer la vitesse de déplacement de i, notée $\vec{v}(i)$. Ces valeurs de positions correspondent aux dernières positions mises à jour à la fréquence de remontée des informations définie ci-après. À partir de la vitesse de déplacement $\vec{v}(i)$ et de la vitesse de déplacement du nœud j, $\vec{v}(j)$, le contrôleur central détermine la vitesse relative $\vec{v}(i,j)$ entre les deux nœuds i et j.

Pour chaque nœud $j \in \boldsymbol{M}(i)$, le contrôleur central calcule, 302, $d^{\text{est}}(i,j)$, la distance estimée entre i et j qui estampille le lien entre ces deux nœuds dans le graphe de proximité. Cette distance est obtenue à partir de la valeur de la position $\overrightarrow{p_{\text{last}}}(i)$ du nœud i et de la valeur de la position $\overrightarrow{p_{\text{last}}}(j)$ du nœud j. La distance estimée $d^{\text{est}}(i,j) = d^{\text{est}}(j,i)$. Si $j \notin M(i)$, il n'est pas nécessaire d'estimer la distance entre i et j car de toute façon aucune connexion radio ne sera établie entre ces deux nœuds ou la probabilité d'une connexion radio tend vers zéro. Cette économie de calcul est potentiellement très importante, principalement dans les cas où la densité du graphe d'intérêts est faible.

À l'instant où le nœud i remonte sa position courante $\overrightarrow{p_{\text{last}}}(i)$, le contrôleur central non seulement calcule la distance estimée à cet instant entre les nœuds i et j, mais prédit également la prochaine distance les séparant en fonction de la fréquence de remontée de positions et de la vitesse relative entre les nœuds :

$$d^{\text{pred}}(i,j) = d^{\text{est}}(i,j) - \frac{\vec{v}(i,j)}{f(i,j)},$$

où $f(i,j)$ est la fréquence à laquelle les nœuds sont censés remonter leurs positions géographiques. Cette fréquence de mise à jour ou de remontée des informations de position dépend notamment de la mobilité des nœuds et de la distance séparant les nœuds ; son calcul sera décrit plus tard dans le document.

Pour chaque noeud $j \in \boldsymbol{M}(i)$, le contrôleur central va définir dans le graphe d'intérêts un paramètre $g(i,j)$, qui vaut 1 si la découverte entre i et j est activée, 304, et qui vaut 0 sinon, avec $g(i,j) = g(j,i)$. La découverte entre i et j est activée lorsque $d^{\text{est}}(i,j) < d^{\text{seuil1}}$, 303. $d^{\text{seuil1}}$ est la distance en-deçà de laquelle on estime que les nœuds sont suffisamment proches pour pouvoir établir une communication du type dispositif-à-dispositif (D2D).

Le contrôleur central exécute deux processus en parallèle. Le premier est en charge de déterminer le moment exact auquel les nœuds doivent essayer de communiquer. Le second correspond aux mises à jour de la fréquence à laquelle un nœud doit faire remonter sa position.

D'une façon succincte (détaillée par la suite), lorsque $g(i,j) = 1$, le contrôleur central envoie une instruction START , 305, aux nœuds *i* et *j* en précisant que, dès l'établissement du lien D2D, *i* est censé envoyer à *j* les contenus spécifiés par $C(i,j)$ dans le graphe d'intérêts, 306. Le cas de transmission du contenu du nœud j vers le nœud i serait traité de façon analogue.

Différentes stratégies pour choisir les contenus prioritaires sont possibles en fonction d'informations complémentaires sur la durée de connexion possible, la taille des contenus, et leur popularité, par exemple.

À chaque remontée d'une nouvelle position par chacun des nœuds $i \in \textbf{N,}$ le contrôleur central suit la procédure décrite dans l'algorithme suivant :

```
ALGORITHME

Le contrôleur central reçoit la dernière position connue

du nœud i, p_last(i), 301, cette position est mise à jour à

la fréquence de remontée choisie,

DEBUT

POUR j∈M(i)

            Calculer d^est(i,j), 302

            Calculer v(i,j)

            Calculer d^pred(i,j)

            SI ((d^est(i,j)< d^seuil1) ou (d^pred(i,j)< d^seuil1)),

303, ALORS

                    g(i,j)=1, 304,

                    START(i,j,C(i,j),C(j,i)) /* Beaconing puis

transférer contenus */, 305, 306

                SINON

                    SI g(i,j)=1 ALORS

                        g(i,j)=0

                        STOP(i,j) /* Arrêter la tentative de

communiquer */, 309

                    FIN_SI

                FIN_SI

        FIN_POUR

    FIN
```

Lorsque le contrôleur central observe la transition de $g(i,j)$ à 1, il envoie aux nœuds *i* et *j* un message contenant l'instruction d'entamer une phase de découverte (*beaconing*) pour que *i* et *j* se découvrent. Le cas échéant, *i* et *j* établissent un lien D2D, selon un processus connu de l'homme du métier.

Le contrôleur central envoie aux nœuds *i* et *j* une liste des contenus à échanger (qui peuvent être un sous ensemble des listes $\overline{C}(i,j)$ et $\overline{C}(j,i)$). En ayant ces listes par avance, les deux nœuds peuvent immédiatement échanger des contenus sans aucune perte de temps et de capacité, 306. Le nœud ayant reçu le contenu transmet au contrôleur central un accusé réception, ACK, 307. Le contrôleur central demande au serveur de contenus de mettre à jour ses données, (terminal, contenu possédé par un terminal), 308.

La fonction START, 305, consiste à envoyer aux nœuds *i* et *j* l'instruction de commencer le « *beaconing* », établir un canal de communication D2D, si les conditions d'établissement de la communication sont réunies, et d'échanger les contenus spécifiés dans le message d'instruction. La fonction STOP, 309, indique que les deux nœuds doivent arrêter d'essayer de communiquer car, soit ils se sont trop éloignés, soit parce qu'ils n'ont plus rien à échanger.

Les nœuds étant potentiellement mobiles et les listes de contenus à échanger variables dans le temps, le contrôleur central va exécuter une méthode de rafraîchissement des données, en particulier des positions de chacun des nœuds, à une fréquence adaptée aux besoins du système :

- la liste $C(i,j)$ est mise à jour par les acquittements renvoyés par *j* vers le contrôleur central (pour les contenus reçus) et par le serveur de contenus (des nouveaux contenus peuvent être demandés, par exemple). Si *j* reçoit un contenu spécifié dans $C(i,j)$ d'un nœud $k \neq i$, ceci entraîne une mise à jour de $C(i,j)$, 308,
- La position $\overrightarrow{p_{last}}(i)$ est mise à jour régulièrement à une fréquence $f(i,j)$, 310, la manière de déterminer la fréquence étant détaillée ci-après,
- La distance estimée $d^{est}(i,j)$ est mise à jour à chaque fois que la position d'un des deux terminaux $\overrightarrow{p_{last}}(i)$ et/ou $\overrightarrow{p_{last}}(j)$ est mise à jour, il en est de même pour la distance prédite $d^{pred}(i,j)$, 
- La vitesse $\overrightarrow{v}(i,j)$ est mise à jour aussi à chaque fois que $\overrightarrow{p_{last}}(i)$ et/ou $\overrightarrow{p_{last}}(j)$ sont mises à jour.

La figure 3B illustre l'approche adoptée par le procédé selon l'invention pour déterminer une valeur de fréquence $f(i,j) \in \{f_{min}, f_{med}, f_{max}\}$ de remontée de positions géographiques en fonction notamment de la mobilité des nœuds et de la distance qui sépare les nœuds ayant des contenus à échanger. Le principe est le suivant : lorsque *i* et *j* sont suffisamment éloignés, il n'est pas la peine d'avoir une fréquence de remontée des informations de position trop élevée. La fréquence de mise à jour des informations de localisation transmises au contrôleur central doit au contraire augmenter lorsque les nœuds se rapprochent, car la probabilité que les nœuds se découvrent augmente également. Le problème est que les nœuds *i* et *j* ne connaissent pas la distance les séparant (seul le contrôleur central la connaît), et à chaque fois que la fréquence de remontée des positions change, le contrôleur central doit envoyer un message au nœud en question pour qu'il adapte la valeur de la fréquence. Un taux important de changement de fréquence impliquerait une surcharge de signalisation trop élevée. Ceci n'est pas acceptable.

L'idée mise en œuvre par le procédé consiste à contrôler ce processus par le bais d'un partage de l'espace en « zones de contrôle » centrées autour de chaque terminal, un terminal pouvant avoir plusieurs voisins en même temps. Pour expliquer le fonctionnement de l'approche, le schéma de la figure 3B montrant trois valeurs seuils $d^{seuil1}$ $d^{seuil2}$ $d^{seuil3}$ définissant trois zones est utilisé:

- Zone 1, $Z_1$, zone de contact, à l'intérieur du rayon $d^{seuil1}$. Il s'agit de la zone dans laquelle les nœuds sont censés communiquer, car elle est définie par le rayon maximum de communication espéré pour la technologie utilisée. Cette zone exige une fréquence élevée $f_{max}$ pour la remontée des positions, car les nœuds ont de forte chance d'être en portée radio et de pouvoir ainsi échanger des contenus ;
- Zone 2, $Z_2$, zone de rapprochement, entre les rayons $d^{seuil1}$ et $d^{seuil2}$. Cette zone sert à pallier aux variations non prévues de la vitesse relative entre les nœuds. La fréquence maximale est également utilisée dans cette zone, car les nœuds se trouvent encore suffisamment proches pour avoir une chance de se découvrir ;
- Zone 3, $Z_3$, zone d'attention, entre les rayons $d^{seuil2}$ et $d^{seuil3}$. Il s'agit d'une zone intermédiaire dans laquelle les nœuds remontent leurs positions à un taux moyen. Cette zone est définie pour permettre une variation de fréquence de mise à jour des positions progressive. Elle sert aussi à pallier aux incertitudes dans les déplacements des terminaux mobiles ;
- Zone 4, $Z_4$, (zone éloignée, au-delà du rayon $d^{seuil3}$). Dans cette zone, il y a peu de chance que les nœuds se rencontrent dans un futur proche, i.e. puissent se rapprocher pour échanger des contenus. La fréquence pour la remontée des positions dans cette zone peut être arbitrairement faible.

L'exemple de structuration de l'axe reliant les nœuds *i* et *j* en quatre zones décrites ci-dessus et illustrées à la figure 3B n'est qu'un exemple. Sans sortir du cadre de l'invention, il est possible de définir plus de quatre zones comme il est illustré sur la figure et la procédure décrite précédemment fonctionnerait de façon analogue.

À l'instant où le nœud *i* remonte sa position courante $\overrightarrow{p_{last}}(i)$, le contrôleur central non seulement calcule les distances $d^{est}(i,j)$ et $d^{pred}(i,j)$, mais prédit également $f^{pred}(i,j)$, qui indique la fréquence correspondant à la zone lorsque les nœuds se trouvent à une distance $d^{pred}(i,j)$.

Le test suivant s'impose :

$$\textbf{SI} \quad f^{\mathrm{pred}}(i,j) \neq f(i,j) \quad \textbf{ALORS}$$

$$f(i,j) = f^{\mathrm{pred}}(i,j)$$

Envoyer instruction à $i$ et à $j$ d'adaptation de fréquence

**FIN_SI**

Lorsqu'un nœud $i$ cherche à communiquer avec plusieurs autres nœuds dans le réseau, la fréquence de remontée des informations de position la plus élevée parmi toutes celles calculées sera retenue.

La taille des zones dépendra notamment de la technologie de communication utilisée. La valeur de $d^{\mathrm{seuil}_1}$ dépend de la technologie. Par exemple, une dizaine de mètres pour Bluetooth, une quarantaine de mètres pour IEEE 802.11ac, où même jusqu'à un demi kilomètre pour le LTE Direct. Pour calculer la taille des autres zones, nous considérons que, pendant la traversée de la zone en question, le nœud devrait pouvoir envoyer au moins deux fois sa position. Ainsi :

$$d^{\mathrm{seuil}_2} = \frac{\vec{v}(i,j)}{f_{\mathrm{max}}} + d^{\mathrm{seuil}_1} \qquad ; \qquad d^{\mathrm{seuil}_3} = \frac{\vec{v}(i,j)}{f_{\mathrm{med}}} + d^{\mathrm{seuil}_2}$$

*Valeurs des fréquences $\{f_{min}, f_{med}, f_{max}\}$ :*

L'efficacité du système est directement liée à la fréquence à laquelle les nœuds remontent leurs positions. Les valeurs de $\{f_{\mathrm{min}}, f_{\mathrm{med}}, f_{\mathrm{max}}\}$ peuvent être déterminées comme suit :

- $f_{\mathrm{min}}$ : est la fréquence minimale qui sert essentiellement à signaler la présence du nœud dans le réseau.
- $f_{\mathrm{max}}$ : dépend à la fois de la technologie de la couche liaison, de la vitesse relative entre les nœuds et de l'objectif de détection. À titre d'illustration, supposons :

  ○ Technologie Bluetooth : portée d'une dizaine de mètres.
  ○ Nœuds piétons : vitesse de déplacement de l'ordre du mètre par seconde.
  ○ Objectif de détection : par exemple, le nœud doit être détecté au moins 80% du temps de présence. Cela veut dire que la première remontée de position ne doit pas se faire après 20% du temps total où les nœuds seront en contact.

Ainsi, deux nœuds piétons se croisant à la vitesse relative de 2m/s (chacun à 1m/s) ne se trouvent à portée de communication que pendant 10s (2x rayon de communication / vitesse relative). Pour respecter l'objectif de 80%, il faut que la fréquence ne soit pas inférieure à $f_{\mathrm{max}}$ = 1/2*s*.

- $f_{\mathrm{med}}$ : Cette fréquence peut être obtenue de plusieurs façons, par exemple il est possible de choisir $f_{\mathrm{med}}$ = $f_{\mathrm{max}}$/2.

Le choix des valeurs de fréquence minimale, maximale et intermédiaire, pour la remontée des informations de position, résultera d'un compromis entre la précision souhaitée pour les positions des terminaux, de la technologie de communication utilisée, du contexte de l'application.

Lorsque plusieurs applications et contenus coexistent, et, lors d'un contact, plusieurs contenus respectent les trois conditions, le contrôleur central va mettre en place un système de priorités entre les contenus. Dans ce contexte, plusieurs solutions peuvent être envisagées. À titre d'illustration, une solution possible consiste à donner une plus grande probabilité de choix aux contenus les plus volumineux. Un contenu de données possède une information de priorité dans un champ de données consacré. Le contrôleur central va donc vérifier la priorité de chacun des contenus à échanger et indiquer au terminal mobile, en même temps que le signal d'activation de son interface de communication, le contenu prioritaire à transmettre en premier. Dans le cas de plusieurs contenus, il est possible d'envisager que le contrôleur central transmette une liste de contenus avec un ordre de transmission.

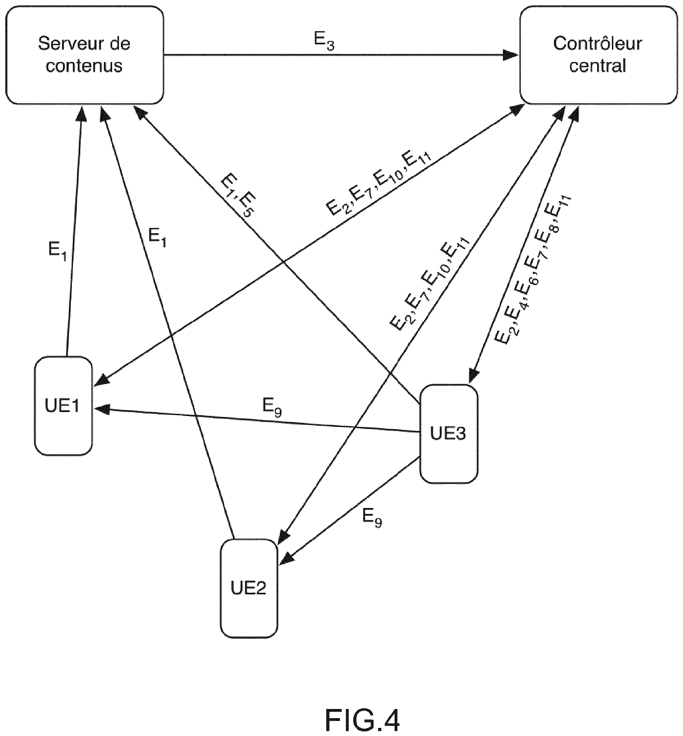

La figure 4 illustre d'une autre façon un exemple d'étapes mises en œuvre par le procédé selon l'invention.

E1 - Etape 1 optionnelle - Chaque terminal utilisateur s'enregistre au préalable au service de distribution de contenu auprès du serveur de contenus. Cette étape ne nécessite pas de terminal mobile. Les terminaux s'authentifient en tant que terminaux auprès du serveur de contenus en utilisant un couple, par exemple contenant un nom d'utilisateur et un mot de passe utilisés lors de l'enregistrement. Le serveur de contenus renvoi à l'utilisateur un identifiant (par exemple un token) dont la validité est temporaire, selon des principes connus de l'homme du métier ;

E2 - Etape 2 - chaque terminal ouvre une session auprès du contrôleur central et envoie des informations contenant sa localisation actuelle, par exemple sa position GPS, la topologie du réseau, éventuellement le voisinage (présence de nœuds dans son voisinage au sens par exemple du voisinage radio connu de l'homme du métier), etc. Ceci peut être réalisé grâce à un token communiqué à l'étape préalable ou bien à partir d'informations mémorisées ;

E3 - Etape 3 - Le serveur de contenu communique au contrôleur central la liste des terminaux ainsi que la liste des contenus que chacun des terminaux doit recevoir. Chaque contenu est communiqué avec un certain nombre d'informations (identifiant du contenu, délai maximum de réception, temps maximal de réception, taille du contenu) ;

E4 - Etape 4

E4A - le contrôleur central calcule un graphe de proximité $G_p$ et un graphe d'intérêts $G_I$. Le contrôleur central sait à tout moment quels nœuds sont dans le voisinage de quels autres nœuds et quels contenus sont à disposition de quels nœuds.

E4B - Le contrôleur central calcule périodiquement la fréquence à laquelle les terminaux doivent remonter leurs positions et informe les terminaux quand cette fréquence doit être mise à jour ;

E4C - Si le contenu $c_k$ doit être distribué aux trois terminaux mobiles représentés dans la figure ci-dessus, alors le contrôleur central choisit, selon un algorithme décrit précédemment, un des trois terminaux mobiles (dans cet exemple, il choisit le terminal UE3) et lui envoie l'instruction de télécharger le contenu directement depuis le serveur de contenus en utilisant sa connexion cellulaire ;

E5 - Etape 5 - Le terminal UE3 télécharge le contenu depuis le serveur de contenus ;

E6 - Etape 6 - Le terminal UE3 informe le contrôleur central qu'il dispose maintenant du contenu $c_k$ ;

E7 - Etape 7 - le contrôleur central envoie aux trois terminaux l'instruction d'activer leur interface de communications directes et d'envoyer le contenu $c_k$ aux terminaux UE1 et UE2 ;

E8 - Etape 8 - le contrôleur central envoie l'instruction au terminal UE3 d'envoyer le contenu $c_k$ aux terminaux UE1 et UE2 ;

E9 - Etape 9 - le terminal UE3 envoie le contenu $c_k$ aux terminaux UE1 et UE2 qui le stocke en local ;

E10 - Etape 10 - les terminaux UE1 et UE2 informent le contrôleur central qu'ils disposent maintenant du contenu $c_k$ ;

E11 - Etape 11 - les terminaux mobiles remontent, quand cela est nécessaire, leurs informations de localisation afin de permettre au contrôleur central de disposer d'un graphe de proximité à jour.

## Champ d'application

L'invention peut être implémenté dans tout système de communications mettant en œuvre une ou plusieurs des technologies de communication suivantes :

- Bluetooth : permet des communications entre terminaux se trouvant dans un rayon d'une dizaine de mètres, nécessite un pairage préalable et disponible sur la plupart des terminaux,
- Wi-Fi-direct : permet des communications entre terminaux se trouvant dans un rayon d'une cinquantaine à une centaine de mètres, nécessite un pairage préalable, disponible sur la plupart des terminaux,
- Wi-Fi ad hoc : permet des communications entre terminaux se trouvant dans un rayon d'une cinquantaine à une centaine de mètres, ne nécessite aucun pairage préalable et n'a pas de limitations,
- LTE ProSe : Cette fonctionnalité est disponible dans le standard LTE, et elle permet la mise en relation directe entre terminaux LTE dans les bandes LTE.

## Avantages

Le procédé et le système selon l'invention proposent une solution qui décharge les terminaux de la partie de contrôle et de la communication et dédie le temps de rencontre entre les terminaux à l'échange du contenu de données effectif. La solution proposée bénéficie des multiples interfaces radio des dispositifs pour augmenter l'efficacité des communications et garantir la qualité des échanges de données entre terminaux.

L'invention offre les avantages suivants :

- Gestion efficace des transmissions de contenu sur les liens de communication D2D (grâce à une connaissance globale de la situation).
- Prise de décision centralisée qui permet un arbitrage entre différentes priorités, et mise à jour en temps réel de la décision (avec la mise à jour des informations de contexte).

- Intégration aisée dans la chaîne de valeur (entre terminaux et les serveurs de contenus).

**Revendications**

1. Procédé d'échange de données dans un réseau de communication D2D, terminal-à-terminal, comprenant au moins un serveur de contenus (22), un contrôleur central (20) comprenant un module de signalisation (206) et plusieurs terminaux utilisateurs mobiles $i, j$, tel qu'il comporte au moins les étapes suivantes :

   Au niveau du contrôleur central (20) :

   - Déterminer un graphe d'intérêts dirigé $G_l$, à partir d'une liste d'utilisateurs et de leurs contenus transmis par le serveur de contenus,
   - Calculer une fréquence $f(i,j)$ de remontée des positions des terminaux définie en fonction au moins de la mobilité des terminaux,
   - Etablir un lien de communication entre au moins deux terminaux $i, j$, en exécutant les étapes suivantes :

      - Pour chaque terminal $j \in \boldsymbol{M}(i)$, où $\boldsymbol{M}(i)$ est l'ensemble des terminaux $j$ différents du terminal $i$ qui ont au moins un contenu à échanger avec le terminal $i$, calculer la distance estimée $d^{\text{est}}(i,j)$ entre le terminal $i$ et le terminal $j$ en utilisant la valeur de la dernière position $\overrightarrow{p_{\text{last}}}(i)$ du terminal $i$ et la valeur de la dernière position $\overrightarrow{p_{\text{last}}}(j)$ du terminal $j$ connues par le contrôleur central,
      - Pour chaque terminal $j \in \boldsymbol{M}(i)$, prédire la distance $d^{\text{pred}}(i,j)$ entre le terminal $i$ et le terminal $j$ en utilisant $d^{\text{est}}(i,j)$, la vitesse relative entre le terminal $i$ et le terminal $j$ et la fréquence de remontée des positions $f(i,j)$,
      - Pour chaque terminal $j \in \boldsymbol{M}(i)$ définir dans le graphe d'intérêts un paramètre $g(i,j)$ qui est mis à 1 lorsque la distance estimée $d^{\text{est}}(i,j)$ ou la distance prédite $d^{\text{pred}}(i, j)$ sont inférieures à une distance seuil $d^{\text{seuil1}}$ et à zéro dans le cas contraire,
      - Lorsque $g(i,j) = 1$, le contrôleur central envoie une instruction au terminal $i$ disposant du contenu à transmettre au terminal $j$, pour établir une communication D2D entre un terminal $i$ et un terminal $j$ et pour transmettre le contenu requis,

   Au niveau du terminal
   Le terminal $j$ émet un accusé réception ACK du contenu vers le contrôleur central (20), ledit contrôleur central émet une instruction de mise à jour de la base des contenus vers le serveur de contenus (22).

2. Procédé selon la revendication 1 **caractérisé en ce que** la fréquence de mise à jour $f(i,j)$ de la position des terminaux est déterminée en fonction du gradient de la distance $d^{\text{est}}(i,j)$.

3. Procédé selon la revendication 2 **caractérisé en ce que** la fréquence de mise à jour $f(i,j)$ de la position d'un terminal est déterminée en définissant plusieurs zones entre un premier terminal $i$ et un terminal $j$ :

   - Une Zone $Z_1$, dans laquelle les terminaux communiquent et dans laquelle la fréquence de mise à jour est une fréquence maximale définie en fonction de l'application $fmax$,
   - Une Zone $Z_4$ dans laquelle les terminaux ont une faible chance de communiquer pour laquelle la fréquence de mise à jour est une fréquence minimale $fmin$,
   - Une ou plusieurs zones intermédiaires dans laquelle ou lesquelles la fréquence de mise à jour est comprise entre $fmin$ et $fmax$.

4. Procédé selon la revendication 3 **caractérisé en ce qu'**à l'instant où le nœud $i$ remonte sa position courante, le contrôleur central calcule la distance estimée à cet instant entre les nœuds $i$ et $j$ et une prochaine distance prédite en fonction de la fréquence actuelle et de la vitesse relative entre les nœuds :

$$d^{\text{pred}}(i,j) = d^{\text{est}}(i,j) - \frac{\vec{v}(i,j)}{f(i,j)} \cdot$$

où $f(i,j) \in \{f_{\text{min}}, f_{\text{med}}, f_{\text{max}}\}$. et en transmettant une instruction à $i$ et à $j$ d'adapter la fréquence **SI** $f^{\text{pred}}(i,j) \neq f(i,j)$.

**5.** Procédé selon l'une des revendications précédentes **caractérisé en ce que** l'on associe un niveau de priorité à un contenu et le contrôleur central sur réception de plusieurs contenus tient compte de ce niveau de priorité pour choisir une interface de communication à activer.

**6.** Procédé selon l'une des revendications 1 à 5 **caractérisé en ce qu'**il utilise une des technologies de communication suivantes : Bluetooth , Wi-Fi-direct, Wi-Fi ad hoc, LTE ProSe.

**7.** Procédé selon la revendication 3 **caractérisé en ce que** l'on utilise le protocole Bluetooth et on détermine la taille des zones de la manière suivante :

$$d^{\text{seuil}_2} = \frac{\vec{v}(i,j)}{f_{\max}} + d^{\text{seuil}_1}; \qquad d^{\text{seuil}_3} = \frac{\vec{v}(i,j)}{f_{\text{med}}} + d^{\text{seuil}_2}$$

$f_{\text{med}} = f_{\max}/2$, $\vec{v}(i,j)$ la vitesse relative des deux terminaux.

**8.** Système de gestion d'échanges de données dans un réseau de communication comprenant un module de communication D2D (205) comportant un serveur de contenus, un contrôleur central (20) et plusieurs terminaux i, j, tel qu'il comporte au moins les éléments suivants :

Un contrôleur central (20) adapté à exécuter les étapes du procédé selon la revendication 1 et comportant au moins :

   • un module de gestion de contenu (201),
   • un module SLA, (202), contenant l'information de service requise pour un contenu en fonction des utilisateurs,
   • un module (203) pour la construction d'un graphe d'intérêts (203), $G_I$, et un module (204) pour la construction d'un graphe de proximité $G_P$, (204),
   • un module de signalisation (206),

Un serveur de contenus comportant au moins :

   • un module SLA (223) contenant l'information de services requise par chacun des terminaux utilisateurs,
   • une mémoire (222) contenant les contenus disponibles pour les terminaux,

Un terminal mobile comprenant au moins :

   • un module (215) contenant les informations de position,
   • un gestionnaire des interfaces de communication (218) adapté à recevoir un signal d'activation de la part du contrôleur central pour la communication entre au moins deux terminaux,
   • un module de gestion de la communication D2D, (213)
   • une mémoire de stockage des contenus (214) demandés par un terminal,
   • un module (216) de réception et exécution des instructions transmises par le contrôleur central,
   • un module de communication (219, 220, 221).

**9.** Système selon la revendication 8 **caractérisé en ce qu'**il comporte un ou plusieurs modules de communication choisis parmi la liste suivante : un module de communication cellulaire (219), un module de communication Bluetooth, (220), un module de communication LTE, un module de communication LTE D2D, un module de communication BLE, un module de communication Wi-Fi (221), un module de communication sans fil.

**Patentansprüche**

**1.** Verfahren zum Austauschen von Daten in einem D2D-Kommunikationsnetz, von Endgerät zu Endgerät, das mindestens einen Inhaltsserver (22), eine zentrale Steuerung (20) mit einem Signalisierungsmodul (206) und mehrere mobile Benutzerendgeräte *i, j* umfasst, so dass es mindestens die folgenden Schritte beinhaltet:

an der zentralen Steuerung (20):

• Bestimmen eines gerichteten Interessengraphen $G_I$ auf der Basis einer Liste von Benutzern und ihrer vom Inhaltsserver übertragenen Inhalte,

• Berechnen einer Häufigkeit $f(i,j)$ der Rückmeldung von Positionen der Endgeräte, definiert in Abhängigkeit von mindestens der Mobilität der Endgeräte,

• Aufbauen einer Kommunikationsverbindung zwischen mindestens zwei Endgeräten $i, j$ unter Ausführung der folgenden Schritte:

• Berechnen, für jedes Endgerät $j \in \mathbf{M}(i)$, wobei $\mathbf{M}(i)$ die Menge der Endgeräte $j$ ist, die vom Endgerät $i$ verschieden sind, die mindestens einen mit dem Endgerät $i$ auszutauschenden Inhalt haben, der geschätzten Entfernung $d^{est}(i,j)$ zwischen Endgerät $i$ und Endgerät $j$ anhand des Wertes der letzten Position $\overrightarrow{p_{last}}(i)$ des Endgeräts $i$ und des Wertes der letzten Position $\overrightarrow{p_{last}}(j)$ des Endgeräts $j$, die der zentralen Steuerung bekannt sind,

• Vorhersagen, für jedes Endgerät $j \in \mathbf{M}(i)$, der Entfernung $d^{pred}(i,j)$ zwischen Endgerät $i$ und Endgerät $j$ anhand von $d^{est}(i,j)$, der relativen Geschwindigkeit zwischen Endgerät $i$ und Endgerät $j$ und der Häufigkeit der Rückmeldung der Positionen $f(i,j)$,

• Definieren, für jedes Endgerät $j \in \mathbf{M}(i)$ im Interessengraphen, eines Parameters $g(i,j)$, der auf 1 gesetzt wird, wenn die geschätzte Entfernung $d^{est}(i,j)$ oder die vorhergesagte Entfernung $d^{pred}(i,j)$ kleiner als eine Schwellenentfernung $d^{seuil_1}$ ist, und andernfalls null ist,

• Senden, durch die zentrale Steuerung, wenn $g(i,j) = 1$, eines Befehls zum Endgerät $i$ mit dem zum Endgerät $j$ zu übertragenden Inhalt zum Aufbauen einer D2D-Kommunikation zwischen einem Endgerät $i$ und einem Endgerät $j$ und zum Übertragen des erforderlichen Inhalts,

am Endgerät:

Aussenden, durch das Endgerät j, einer Empfangsbestätigung ACK des Inhalts an die zentrale Steuerung (20), wobei die zentrale Steuerung einen Befehl zur Aktualisierung der Inhaltsbasis zum Inhaltsserver (22) aussendet.

2. Verfahren nach Anspruch 1, **dadurch gekennzeichnet, dass** die Häufigkeit $f(i,j)$ der Aktualisierung der Position der Endgeräte in Abhängigkeit vom Gradienten der Entfernung $d^{est}(i,j)$ bestimmt wird.

3. Verfahren nach Anspruch 2, **dadurch gekennzeichnet, dass** die Häufigkeit $f(i,j)$ der Aktualisierung der Position eines Endgeräts durch Definieren mehrerer Zonen zwischen einem ersten Endgerät $i$ und einem Endgerät $j$ bestimmt wird:

• eine Zone $Z_1$, in der die Endgeräte kommunizieren und in der die Aktualisierungshäufigkeit eine in Abhängigkeit von der Anwendung $fmax$ definierte maximale Häufigkeit ist,

• eine Zone $Z_4$, in der die Endgeräte eine geringe Chance zum Kommunizieren haben, für die die Aktualisierungshäufigkeit eine minimale Häufigkeit $fmin$ ist,

• eine oder mehrere Zwischenzonen, in der/denen die Aktualisierungshäufigkeit zwischen $fmin$ und $fmax$ liegt.

4. Verfahren nach Anspruch 3, **dadurch gekennzeichnet, dass** zu dem Zeitpunkt, zu dem der Knoten $i$ seine aktuelle Position zurückmeldet, die zentrale Steuerung die geschätzte Entfernung zu diesem Zeitpunkt zwischen den Knoten $i$ und $j$ und eine nächste vorhergesagte Entfernung in Abhängigkeit von der aktuellen Häufigkeit und der relativen Geschwindigkeit zwischen den Knoten berechnet:

$$d^{pred}(i,j) = d^{est}(i,j) - \frac{\vec{v}(i,j)}{f(i,j)}$$

wobei $f(i,j) \in \{f_{min}, f_{med}, f_{max}\}$ ist, und durch Übertragen eines Befehls zu $i$ und zu $j$ zum Anpassung der Häufigkeit **SI** $f^{pred}(i,j) \neq f(i,j)$.

5. Verfahren nach einem der vorherigen Ansprüche, **dadurch gekennzeichnet, dass** eine Prioritätsstufe mit einem Inhalt assoziiert wird und die zentrale Steuerung beim Empfang mehrerer Inhalte diese Prioritätsstufe berücksichtigt, um eine zu aktivierende Kommunikationsschnittstelle auszuwählen.

6. Verfahren nach einem der Ansprüche 1 bis 5, **dadurch gekennzeichnet, dass** eine der folgenden Kommunikationstechnologien benutzt wird: Bluetooth, Wi-Fi-direct, Wi-Fi ad hoc, LTE ProSe.

**7.** Verfahren nach Anspruch 3, **dadurch gekennzeichnet, dass** das Bluetooth-Protokoll verwendet wird und die Größe der Zonen wie folgt bestimmt wird:

$$d^{\text{seuil}_2} = \frac{\vec{v}(i,j)}{f_{\max}} + d^{\text{seuil}_1}; \quad d^{\text{seuil}_3} = \frac{\vec{v}(i,j)}{f_{\text{med}}} + d^{\text{seuil}_2}$$

$f_{\text{med}} = f_{\max}/2$, $\vec{v}(i,j)$ die relative Geschwindigkeit der beiden Endgeräte.

**8.** System zur Verwaltung des Datenaustauschs in einem Kommunikationsnetz umfassend ein D2D-Kommunikationsmodul (205), das einen Inhaltsserver, eine zentrale Steuerung (20) und mehrere Endgeräte i, j umfasst, so dass es mindestens die folgenden Elemente umfasst:

eine zentrale Steuerung (20), die zum Ausführen der Schritte des Verfahrens nach Anspruch 1 ausgelegt ist, und mindestens Folgendes umfasst:

• ein Inhaltsverwaltungsmodul (201),
• ein SLA-Modul (202), das die Dienstinformation enthält, die für nutzerbasierte Inhalte erforderlich ist,
• ein Modul (203) zum Konstruieren eines Interessengraphen (203), $G_I$, und ein Modul (204) zum Konstruieren eines Näherungsgraphen $G_P$ (204),
• ein Signalisierungsmodul (206),

einen Inhaltsserver, der mindestens Folgendes umfasst:

• ein SLA-Modul (223), das die Dienstinformation enthält, die für jedes der Benutzerendgeräte erforderlich ist,
• einen Speicher (222), der die für die Endgeräte verfügbaren Inhalte enthält, ein mobiles Endgerät, das mindestens Folgendes umfasst:
• ein Modul (215), das die Positionsinformationen enthält,
• einen Kommunikationsschnittstellen-Manager (218), ausgelegt zum Empfangen eines Aktivierungssignals von der zentralen Steuerung für die Kommunikation zwischen mindestens zwei Endgeräten,
• ein D2D-Kommunikationsverwaltungsmodul (213),
• einen Speicher zum Speichern von Inhalten (214), die von einem Endgerät verlangt werden,
• ein Modul (216) zum Empfangen und Ausführen von von der zentralen Steuerung übertragenen Befehlen,
• ein Kommunikationsmodul (219, 220, 221).

**9.** System nach Anspruch 8, **dadurch gekennzeichnet, dass** es ein oder mehrere Kommunikationsmodule umfasst, die aus der folgenden Liste ausgewählt sind: einem zellularen Kommunikationsmodul (219), einem Bluetooth-Kommunikationsmodul (220), einem LTE-Kommunikationsmodul, einem LTE-D2D-Kommunikationsmodul, einem BLE-Kommunikationsmodul, einem WiFi-Kommunikationsmodul (221), einem drahtlosen Kommunikationsmodul.

## Claims

**1.** Method for data exchange in a D2D terminal-to-terminal communication network, comprising at least one content server (22), a central controller (20) comprising a signalling module (206) and multiple mobile user terminals *i, j* **characterized in that** it comprises at least the following steps:

At the central controller (20):

• determining a directed interest graph $G_I$ from a list of users and their contents transmitted by the content server,
• calculating a feedback frequency *f(i, j)* of the positions of the terminals defined in accordance at least with the mobility of the terminals,
• establishing a communication link between at least two terminals *i, j* by carrying out the following steps:
• for each terminal j $\in$ **M**(*i*), where **M**(*i*) is the set of the terminals *j* different from the terminal *i* which have at least one content to be exchanged with the terminal $i$, calculating the estimated distance $d^{est}(i,j)$ between the terminal $i$ and the terminal $j$ using the value of the last position $\overrightarrow{p_{last}}(i)$ of the terminal $i$ and the value of the last position $\overrightarrow{p_{last}}(j)$ of the terminal j which are known by the central controller,

• for each terminal $j \in \mathbf{M}(i)$, predicting the distance $d^{pred}(i,j)$ between the terminal $i$ and the terminal j using $d^{est}(i,j)$, the relative speed between the terminal $i$ and the terminal $j$ and the feedback frequency of the positions $f(i,j)$,

• for each terminal $j \in \mathbf{M}(i)$, defining in the interest graph a parameter $g(i,j)$ which is set to 1 when the estimated distance $d^{est}(i,j)$ or the predicted distance $d^{pred}(i,j)$ is less than a threshold distance $d^{seuil_1}$, and otherwise is set to zero,

• when $g(i,j) = 1$, the central controller sends an instruction to the terminal $i$ having the content to be transmitted to the terminal $j$ in order to establish a D2D communication between a terminal $i$ and a terminal $j$ and to transmit the content required, At the terminal

the terminal $j$ transmits an acknowledgement of receipt ACK of the content to the central controller (20), the central controller transmits an instruction to update the content base to the content server (22).

2. Method according to claim 1, **characterised in that** the update frequency $f(i,j)$ of the position of the terminals is determined as a function of the gradient of the distance $d^{est}(i,j)$.

3. Method according to claim 2, **characterised in that** the update frequency $f(i,j)$ of the position of a terminal is determined by defining multiple zones between a first terminal $i$ and a terminal $j$:

• a zone $Z_1$ in which the terminals communicate and in which the update frequency is a maximum frequency defined in accordance with the application $fmax$,

• a zone $Z_4$ in which the terminals have a small chance of communicating for which the update frequency is a minimum frequency $fmin$,

• one or more intermediate zones in which the update frequency is between $fmin$ and $fmax$.

4. Method according to claim 3, **characterised in that**, at the time at which the node $i$ relates back its current position, the central controller calculates the estimated distance at this time between the nodes $i$ and $j$ and a next predicted distance in accordance with the current frequency and the relative speed between the nodes:

$$d^{\mathrm{pred}}(i,j) = d^{\mathrm{est}}(i,j) - \frac{\vec{v}(i,j)}{f(i,j)}$$

where $f(i,j) \in \{f_{\min}, f_{\mathrm{med}}, f_{\max}\}$ and by transmitting an instruction to $i$ and to $j$ for adapting the frequency **SI** $f^{\mathrm{pred}}(i,j) \neq f(i,j)$.

5. Method according to any one of the preceding claims, **characterised in that** a priority level is associated with a content and the central controller on receipt of multiple contents takes into account this priority level in order to select a communication interface to be activated.

6. Method according to any one of claims 1 to 5, **characterised in that** it uses one of the following communication technologies: Bluetooth, direct Wi-Fi, ad hoc Wi-Fi, LTE ProSe.

7. Method according to claim 3, **characterised in that** the Bluetooth protocol is used and the size of the zones is determined in the following manner:

$$d^{\mathrm{seuil}_2} = \frac{\vec{v}(i,j)}{f_{\max}} + d^{\mathrm{seuil}_1}; \quad d^{\mathrm{seuil}_3} = \frac{\vec{v}(i,j)}{f_{\mathrm{med}}} + d^{\mathrm{seuil}_2}$$

$$f_{\mathrm{med}} = f_{\max}/2, \vec{v}(i,j)$$

the relative speed of the two terminals.

**EP 3 563 593 B1**

8. System for controlling data exchanges in a communication network, comprising a D2D communication module (205) which comprises a content server, a central controller (20) and multiple terminals i, j, such that it comprises at least the following elements:

a central controller (20) which is capable of executing the steps of the method according to claim 1 and which comprises at least:

- a content control module (201),
- an SLA module (202) which contains the service information required for a content in accordance with the users,
- a module (203) for the construction of an interest graph (203), $G_I$, and a module (204) for the construction of a proximity graph $G_P$ (204),
- a signalling module (206),

a content server comprising at least:

- an SLA module (223) which contains the service information required by each of the user terminals,
- a memory (222) containing the contents available for the terminals,

a mobile terminal comprising at least:

- a module (215) containing the position information,
- a communication interface controller (218) adapted to receive an activation signal from the central controller for the communication between at least two terminals,
- a D2D communication control module (213),
- a memory for storing the content (214) requested by a terminal,
- a module (216) for receiving and carrying out the instructions transmitted by the central controller,
- a communication module (219, 220, 221).

9. System according to claim 8, **characterised in that** it comprises one or more communication modules selected from the following list: a cellular communication module (219), a Bluetooth communication module (220), an LTE communication module, a D2D LTE communication module, a BLE communication module, a Wi-Fi communication module (221), a wireless communication module.

18

FIG.1

**FIG.2**

- Utilisateurs SLA, etc — 223
- 222
- 22
- 20
- 201
- SLA — 202
- G$_l$ — 203
- G$_p$ — 204
- D2D — 205
- 206

- 211
- API (js, Android, iOS) — 212
- Gestion de Communication D2D — 214
- Position, batterie,… — 215
- Signalisation — 216
- 217
- 218
- 219
- BT — 220
- Wi-Fi — 221
- 213
- 21

- 211
- API (js, Android, iOS) — 212
- Gestion de Communication D2D — 214
- Position, batterie,… — 215
- Signalisation — 216
- 217
- 218
- 219
- BT — 220
- Wi-Fi — 221
- 213
- 21

FIG.3A

FIG.3B

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8862125 B
- WO 2015161442 A
- EP 3041286 A
- US 20140194115 A


**Littérature non-brevet citée dans la description**

- **K. FALL.** A delay-tolerant network architecture for challenged internets. ACM Sigcomm, 2003, 27-34
- **S.-S. KANG ; M. W. MUTKA.** A mobile peer-to-peer approach for multimedia content sharing using 3G/WLAN dual mode channels. Wireless Communications and Mobile Computing, 2005, vol. 5, 633-645
- **M.-F. LEUNG ; S.-H. CHAN.** Broadcast-based peer-to-peer collaborative video streaming among mobiles. *IEEE Transactions on Broadcasting,* Mars 2007, vol. 53 (1), 350-361
- **L. PELUSI ; A. PASSARELLA ; M. CONTI.** Opportunistic networking data forwarding in disconnected mobile ad hoc networks. *IEEE Communications Magazine,* 2006, vol. 44 (11), 134-141
- **J. WHITBECK ; Y. LOPEZ ; J. LEGUAY ; V. CONAN ; M. D. DE AMORIM.** Push-and-track: Saving infrastructure bandwidth through opportunistic forwarding. *Pervasive and Mobile Computing,* Octobre 2012, vol. 8 (5), 682-697